(19) Europäisches Patentamt
European Patent Office
Office européen des brevets

(11) EP 2 698 627 B1

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **12180529.5**

(22) Anmeldetag: **15.08.2012**

(51) Int Cl.:
*G01N 21/35* (2014.01)          *G01N 21/39* (2006.01)
*G01N 21/78* (2006.01)

(54) **Verfahren zur optischen Bestimmung mindestens eines Analyten in einer Probe**

Method for optical determination of at least one analyte in a sample

Procédé de détermination optique d'au moins un analyte dans un échantillon

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2014 Patentblatt 2014/08**

(73) Patentinhaber: **Siemens Healthcare Diagnostics Products GmbH**
**35041 Marburg (DE)**

(72) Erfinder:
• **Vitzthum, Frank**
  **35216 Biedenkopf (DE)**
• **Haude-Barten, Anja**
  **35041 Marburg (DE)**
• **Schwarz, Herbert**
  **35102 Lohra (DE)**

(56) Entgegenhaltungen:
WO-A1-96/06344          US-A1- 2003 023 148
US-A1- 2003 078 746     US-A1- 2008 179 530

**Beschreibung**

ERFINDUNGSGEBIET

Die vorliegende Erfindung bezieht sich auf ein Verfahren zur optischen Bestimmung mindestens eines Analyten in einer Probe, bei welchem eine Abweichung von einem Referenzwert bzw. der Referenzkurve als Indiz dafür gewertet wird, dass die optische Bestimmung des mindestens einen Analyten durch Messartefakte verfälscht ist.

HINTERGRUND DER ERFINDUNG

Insbesondere in der klinischen Diagnostik werden Analyten in einer Probe häufig auf optischem Wege mithilfe von Indikatorfarbstofffen nachgewiesen, also Farbstoffen, die mit dem nachzuweisenden Analyt reagieren, etwa unter Bildung eines Komplexes und/oder durch eine Reaktion, bei der der Farbstoff von einer Form in eine andere überführt wird. In beiden Fällen ändert der Farbstoff seine spektralen Eigenschaften, also etwa seine Absorptions- oder seine Fluoreszenzcharakteristik. Die Änderung der spektralen Eigenschaften kann somit als ein Maß für die Gegenwart eines Analyten herangezogen werden

Häufig ist jedoch die Wechselwirkung des Farbstoffes mit dem nachzuweisenden Analyt nicht vollkommen spezifisch. In solchen Fällen reagiert der Farbstoff auch mit anderen in der Probe enthaltenden Substanzen oder Substanzklassen, und verändert auch hierbei seine spektralen Eigenschaften. Des Weiteren kann auch der nachzuweisende Analyt auch mit anderen Substanzen wechselwirken, so dass die Bindung oder die Reaktion mit dem Farbstoff beeinträchtigt wird.

Ebenso kann eine Probe Substanzen enthalten, die zwar nicht unbedingt mit dem Analyt oder dem Farbstoff reagieren oder wechselwirken, die aber in den relevanten Wellenlängenbereichen absorbieren und damit die Nachweisreaktion beeinflussen.

Materialien oder Substanzen, die Bestimmungen stören, werden im Folgenden auch als sogenannte Störstoffe bezeichnet. Die Gegenwart von solchen Störstoffen kann zu fehlerhaften Bestimmungen des Analyten führen, so dass deren Konzentration oder Aktivität in einer Probe unter- oder überschätzt wird. Insbesondere in der klinischen Diagnostik kann dies zu falschen Befunden und damit zu einer falschen Diagnose führen.

Dies ist zum Beispiel bei der klinischen Bestimmung von Albumin, insbesondere in Urin, problematisch. Die Bestimmung von Albumin im Urin ist einer der wichtigsten und am häufigsten verwendeten Parameter in der klinischen Chemie. Dies gilt sowohl für das Zentrallabor als auch für die Diagnostik vor Ort (Point of Care). Aber auch Gesamtproteinbestimmungen im Urin oder Plasma haben klinische Relevanz. Des Weiteren sind Verfahren zur Bestimmung von Proteinen und deren Konzentration von großem generellem Interesse. Beispielsweise sind Verfahren zur Proteinbestimmung bei der Entwicklung und zur Prozesskontrolle von Proteinreinigungen essentiell, und auch in der Grundlagenforschung spielt die Bestimmung des Proteingehalts in einer Probe eine große Rolle.

Die Spezifität des Nachweises von Analyten mittels geeigneter Indikatorfarbstoffe kann dadurch verbessert werden, dass spezifischere Farbstoffe entwickelt werden. Auf diese Weise werden Parallelreaktionen des Farbstoffs minimiert. Beispielsweise wird für den Nachweis von Albumin im Urin vorzugsweise Bromcresolgrün oder Bromcresolrosa verwendet. Diese Farbstoffe reagieren kaum mit anderen Proteinen. Dies reduziert das Risiko fehlerhafter Bestimmung durch die Gegenwart anderer Proteine als Albumin. Trotz der Verwendung spezifischerer Farbstoffe treten jedoch noch immer fehlerhafte Bestimmungen aufgrund des Einflusses von Störstoffen auf.

Ein anderer Ansatz, etwaige Artefakte durch Störstoffe zu reduzieren, besteht darin, zeitgleich bei zwei verschiedenen Wellenlängen zu messen. So kann z.B. einerseits eine Wellenlänge gewählt werden, bei welcher die analytabhängigen Änderungen der optischen Eigenschaften des Indikatorfarbstoffes maximal sind, und andererseits eine Wellenlänge, bei welcher eine Referenzmessung durchgeführt wird. Beispielsweise können Chromophore wie Hemoglobin und Bilirubin oder durch Störstoffe hervorgerufene Trübungen stören. Daher werden beispielsweise Vergleichsmessungen im Absorptionsbereich von Hemoglobin und Bilirubin bei 540 nm oder zur Ermittlung von Trübungen im langwelligen Bereich, beispielsweise bei 700 oder 750 nm durchgeführt. Wird ein bestimmter Grenzwert überschritten, deutet dies auf eine Trübung oder den Einfluss eines Chromphoren hin. Wenn der Grenzwert überschritten wird, ist die Bestimmung als möglicherweise falsch einzustufen.

Auch dieser Ansatz kann Artefakte durch Störstoffe nicht gänzlich unterdrücken, hinzu kommt, dass durch nicht unterdrückte Artefakte verfälschte Messwerte für den Benutzer häufig nicht kenntlich sind und er daher das falsche Messergebnis als korrekt annehmen muss. Ferner können z.B. Chromophore Trübungen der Probe hervorrufen und so das Messergebnis verfälschen.

KURZE DARSTELLUNG DER ERFINDUNG

Es ist eine Aufgabe der vorliegenden Erfindung, die Anzahl falscher Bestimmungen von Analyten zu reduzieren.

Es ist eine weitere Aufgabe der vorliegenden Erfindung, die Reproduzierbarkeit optischer Bestimmungen von Analyten zu erhöhen. Es ist eine weitere Aufgabe der vorliegenden Erfindung, auch solche Proben einer Analyse zugänglich zu machen, die mit einer gewissen Wahrscheinlichkeit verunreinigt sind.

Diese Aufgaben werden mit den Merkmalen des vorliegenden Anspruchssatzes gelöst. Die Unteransprüche geben bevorzugte Ausführungsformen an. Dabei ist zu beachten, dass die genannten Bereichsangaben durchweg einschließlich der jeweiligen Grenzwerte zu verstehen sind.

## AUSFÜRHLICHE BESCHREIBUNG DER ERFINDUNG

Erfindungsgemäß ist ein Verfahren zur optischen Bestimmung mindestens eines Analyten in einer Probe vorgesehen, bei welchem Verfahren mindestens ein Indikatorfarbstoff verwendet wird, der seine optischen Eigenschaften bei mindestens einer gegebenen Lichtwellenlänge ("Messwellenlänge") in Abhängigkeit der Konzentration eines gegebenen Analyten ändert.

Dabei wird in einem Schritt a) mindestens eine optische Eigenschaft der Probe bei mindestens einer Messwellenlänge bestimmt, und in einem Schritt b) mindestens eine optische Eigenschaft der Probe zusätzlich bei mindestens einer weiteren Lichtwellenlänge ("Referenzwellenlänge") bestimmt. Optional kann vorgesehen sein, dass in einem Schritt c) aus den beiden in den Schritten a) und b) ermittelten Messwerten ein arithmetisch berechneter Wert ermittelt wird.

Ferner ist vorgesehen, in einem Schritt d) den in Schritt b) durch Bestimmung der mindestens einen optischen Eigenschaft der Probe bei der Referenzwellenlänge erhaltenen Messwert - bzw., wenn vorhanden, den in Schritt c) arithmetisch berechneten Wert - mit einem Referenzwert bzw. einer Referenzkurve zu vergleichen, die anhand von Messwerten ("Kalibrationsmesswerten") ermittelt wurde, die bei Messung mindestens einer optischen Eigenschaft von Referenzproben bei der mindestens einen Messwellenlänge und der mindestens einen Referenzwellenlänge bestimmt wurden. Dabei enthalten bzw. enthielten die Referenzproben ebenso wie die Probe mindestens einen Indikatorfarbstoff sowie bekannte Konzentrationen des Analyten.

In einem Schritt e) wird eine Mindestabweichung des in Schritt b) durch Bestimmung der mindestens einen optischen Eigenschaft der Probe bei der Referenzwellenlänge erhaltene Messwert - bzw., wenn vorhanden, des in Schritt c) arithmetisch berechneten Werts - von dem Referenzwert bzw. der Referenzkurve als Indiz dafür gewertet, dass die optische Bestimmung des mindestens einen Analyten durch Messartefakte verfälscht ist. Wichtig bei dem genannten Verfahren ist, dass die mit den Bezugszeichen a) - e) bezeichneten Verfahrensschritte keineswegs in der genannten Reihenfolge ablaufen müssen. Vom Schutz des vorliegenden Anmeldung erfasst sind auch solche Verfahren, bei denen die Reihenfolge der Verfahrensschritte vertauscht ist.

Die Messwellenlänge wird bevorzugt so gewählt, dass bei ihr die analytabhängigen Änderungen der optischen Eigenschaften des Indikatorfarbstoffes maximal sind.

Zum Unterschied zwischen Referenzwert und Referenzkurve sei darauf hingewiesen, dass ein Referenzwert dann verwendet werden kann, wenn als Referenzwellenlänge eine isosbestische Wellenlänge verwendet wird. Eine Referenzkurve ist dann erforderlich, wenn als Referenzwellenlänge eine nichtisosbestische Wellenlänge verwendet wird.

Grundsätzlich sind zwei Varianten des Verfahrens denkbar, die beide über denselben erfindungsgemäßen Gedanken verbunden sind. Diese Varianten der Erfindung sind in den unabhängigen Ansprüche 1 und 2 definiert.

In Variante 1 werden Messungen bei Messwellenlänge(n) und Referenzwellenlänge(n)durchgeführt. Anhand der Messwellenlänge ergibt sich aus der Referenzkurve ein bestimmter Referenzwert. Bei Verwendung eines isosbestischen Punktes ist keine Referenzkurve nötig. Der Messwert bei einer Referenzwellenlänge darf nicht über ein bestimmtes Maß hinaus von diesem Referenzwert abweichen, ansonsten ist dies ein Indiz für ein Messartefakt. Gemäß Variante 2 werden Messungen bei Messwellenlänge(n) und Referenzwellenlänge(n)durchgeführt. Aus den Messwerten der Messwellenlänge(n) und der Referenzwellenlängen werden Werte (arithmetisch) berechnet. Analog wird mit einer Kalibrations- oder Referenzkurve verfahren. Die berechneten Werte der Messungen werden mit denen der Referenzkurve verglichen. Eine Mindestabweichung des ermittelten arithmetisch berechneten Wertes von dem Referenzwert wird als Indiz für ein Artefakt gewertet. Bevorzugt ist dabei vorgesehen, bei der optischen Bestimmung die Konzentration mindestens eines Analyten in der Probe bestimmt wird.

Besonders bevorzugt handelt es sich bei dem Analyten um mindestens ein Biomolekül, bevorzugt ausgewählt aus der Gruppe enthaltend Proteine, Peptide, Aminosäuren, Poly-, Oligo- oder Monosaccharide, Poly-, Oligo- oder Mononucleinsäuren, oder Lipide.

Besonders bevorzugt sind hier Proteine. Insbesondere bevorzugt ist das Protein Albumin, das u.A. für die Diagnostik einer Proteinurie, die auf eine Niereninsuffizienz schließen lässt, Verwendung findet. So weist eine Albuminkonzentration > 20 mg/l Urin auf die beginnende Entwicklung einer Nephropathie hin und ist ein früher Marker für glomeruläre Schädigungen.

Weiterhin ist bevorzugt vorgesehen, dass es sich bei den zu bestimmenden optischen Eigenschaften des Indikatorfarbstoffs und/oder der Probe um die Absorption und/oder Extinktion handelt.

Besonders bevorzugt ist vorgesehen, dass es sich bei dem Indikatorfarbstoff um einen Farbstoff ausgewählt aus der Gruppe enthaltend

- Coomassie Brilliant Blau (CBB)
- DIDNTB
- HABA
- Bromcresolgrün (BCG)
- Bromcresol Purple (BCP)
- Bromphenolblau (BPB)
- Tetrabromophenolblau, (TBPB)
- Pyrogallolsulfonephthal

handelt.

Bei DIDNTB handelt es sich um bis-(3c,3$^2$-diiodo-4c4$^2$-dihydroxy-5c5'-dinitrophenyl)-3,4,5,6-tetrabromosulfonphthatein (DIDNTB). Bei HABA handelt es sich um 2-(4c-hydroxyazobenzene) benzoic acid (HABA).

Weitere in Frage kommende Farbstoffe sind Diphenylamin, DABA (3,5-Diaminobenzoic acid dihydrochloride), Orcinol und Anthracyclinantibiotika wie Adriamycin oder Mithramycin

Besonders bevorzugt ist ferner vorgesehen, dass der Messartefakt mindestens durch einen Störstoff verursacht wird. Ein solcher Störstoff reagiert entweder ebenfalls mit dem Indikatorfarbstoff, der daraufhin seine spektralen Eigenschaften ändert, wechselwirkt mit dem Analyten oder absorbiert in den relevanten Wellenlängenbereichen, und beeinflusst damit die Nachweisreaktion.

Bei den Störstoffen kann es sich um ganz unterschiedliche Substanzklassen handeln, wie z.B. niedermolekulare organische Verbindungen, Detergenzien, Heterozyklen oder Proteine. Beispielsweise können Detergenzien wie SDS und Triton X-100, Heterocyclen wie NAD, oder organische Verbindungen wie Glycin und HEPES Proteinbestimmungen mittels Coomassie Brilliant Blau (CBB) verfälschen. Die Methode der Albuminbestimmung durch Bromcresol Purple (BCP) kann durch die Gegenwart von niedermolekularen Störstoffen wie dem endogenen uremischen Toxin 3-Carbox-4-methyl-5-propyl-2-furanpropansäure (CMPF) gestört werden. Ferner können auch in der Probe enthaltene Chromophore, wie z.B. Hämoglobin oder dessen Abbauprodukte, wie Bilirubin, als Störstoffe wirken.

Besonders bevorzugt ist vorgersehen, dass es sich bei der Referenzwellenlänge in Bezug auf den Indikatorfarbstoff um eine isosbestische Wellenlänge handelt.

Eine isosbestische Wellenlänge ist eine Wellenlänge, bei welcher sich die optischen Eigenschaften eines Indikatorfarbstoffes gegenüber dem einfallenden Licht nicht oder nur kaum in Abhängigkeit des spezifischen Analyts ändern - anders als die Messwellenlänge, bei welcher die Änderung der optischen Eigenschaften des Indikatorfarbstoffes in Abhängigkeit des spezifischen Analyts möglichst maximal (und idealerweise auch proprortional) ist. Bei einer isosbestischen Wellenlänge erhält man beispielsweise in Absorptionsmessungen bei Proben, die neben dem Indikatorfarbstoff nur verschiedene Konzentrationen des spezifischen Analyts enthalten, keine konzentrationsabhängige Absorptionsänderung, sondern stets eine mehr oder minder konstante Absorption, die sich vorwiegend nach der Konzentration des Indikatorfarbstoffes richtet. Auf diese Weise lässt sich - gegebene Konzentration des Indikatorfarbstoffes vorausgesetzt - ein Referenzwert messen, mit dem später konkret erhaltene Messwerte verglichen werden. Wird nämlich eine von diesem Wert abweichende Absorption gemessen, lässt dies auf einen Artefakt durch einen Störstoff schließen.

In diesem Fall ist vorgesehen, dass zur Bestimmung der Frage, ob eine Mindestabweichung des in Schritt b) durch Bestimmung der mindestens einen optischen Eigenschaft der Probe bei der Referenzwellenlänge erhaltenen Messwerts bzw., wenn vorhanden, des in Schritt c) arithmetisch berechneten Werts von dem Referenzwert vorliegt, geprüft wird, ob

- der Messwert bzw. der arithmetisch berechnete Wert außerhalb der einfachen oder mehrfachen Standardabweichung des Referenzwertes des Standards der Eichreihe liegt und/oder

- die Sensitivität und/oder Spezifität des Messwerts bzw. des arithmetisch berechneten Werts außerhalb von gegebenen Grenzwerten liegt.

Weiter ist bevorzugt vorgesehen, dass es sich bei der Referenzwellenlänge in Bezug auf den Indikatorfarbstoff um eine Wellenlänge handelt, bei welcher der Indikatorfarbstoff weder ein Absorptionsmaximum noch ein Absorptionsminimum aufweist.

Dabei ist bevorzugt vorgesehen, dass die Referenzkurve durch

- Inter- und/oder Extrapolation
- lineare Regression, und/oder
- ein Polynom zweiter oder höherer Ordnung

der gemäss Schritt d) gewonnenen Kalibrationsmesswerte ermittelt wurde.

Besonders bevorzugt ist dabei vorgesehen, dass zur Bestimmung der Frage, ob eine Mindestabweichung des in Schritt b) durch Bestimmung der mindestens einen optischen Eigenschaft der Probe bei der Referenzwellenlänge erhaltenen Messwerts bzw., wenn vorhanden, des in Schritt c) arithmetisch berechneten Werts von dem Referenzwert bzw. der Referenzkurve vorliegt, geprüft wird, ob

- der Messwert bzw. der arithmetisch berechnete Wert außerhalb eines gegebenen Konfidenzintervalls des Referenzwerts bzw. der Referenzkurve liegt,
- der Messwert bzw. der arithmetisch berechnete Wert außerhalb eines durch Interpolation oder Regression der einfachen oder mehrfachen Standardabweichung der einzelnen Kalibrationsmesswerte des Standards der Eichreihe gebildeten Intervalls liegt, und/oder
- die Sensitivität und/oder Spezifität des Messwerts bzw. des arithmetisch berechneten Werts außerhalb von gegebenen Grenzwerten liegt.

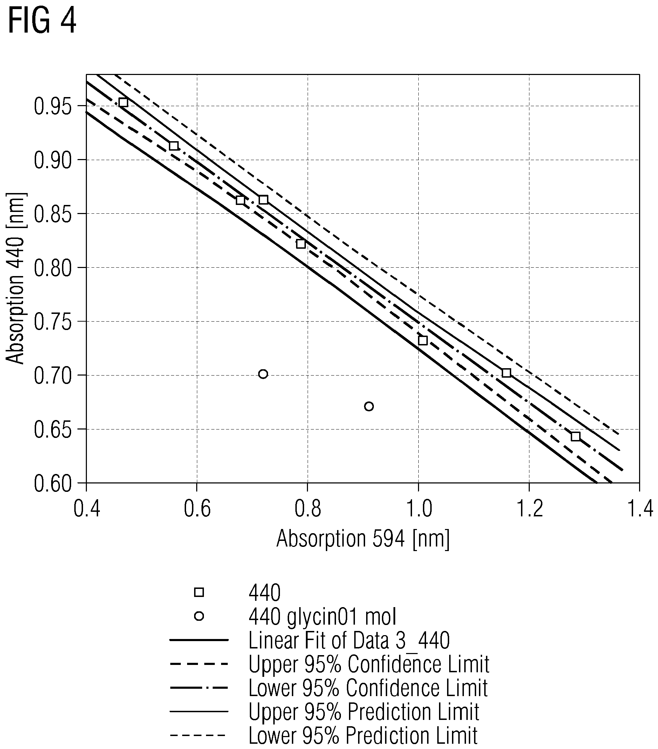

In der Praxis kann dabei wie folgt vorgegangen werden: Es wird zunächst eine Kalibrationskurve erstellt, bei welcher für störstofffreie Proben bekannter Konzentration, die Indikatorfarbstoff enthalten, die Absorption bei der Referenzwellenlänge und der Messwellenlänge gemessen wurde. Die erhaltenen Werte wurden gegeneinander in einem Koordinatensystem aufgetragen, und anschließend wird eine lineare Regression durchgeführt sowie Konfidenzintervalle berechnet. In der Praxis beschaffte Proben werden nun in ähnlicher Weise mit Indikatorfarbstoff versetzt und vermessen. Proben, die Störstoff enthalten, der die Messungen wesentlich beeinflusst und so zu Messartefakten führt, liegen außerhalb der Konfidenzintervalle und können somit als fehlerhaft identifiziert werden. Fig. 4 zeigt die Umsetzung dieses Verfahrens.

Weiterhin könnten die einfachen, zweifachen oder dreifachen Standardabweichungen der Kalibrationsmesswerte verwendet werden, um einen Referenzbereich festzulegen. Hierzu werden die Kalibrationsmesswerte mehrfach gemessen und Mittelwert und Standardrabweichung bestimmt. Der entsprechende Wert wird zum Mittelwert addiert oder von diesem subtrahiert. Die Abhängigkeit der Werte oberhalb der Mittelwerte und die der Werte unterhalb der Mittelwerte von der Absorption, z.B. bei 594 nm, oder einem entsprechenden Parameter wird durch eine Funktion, beispielsweise ein Polynom oder eine Linearregression beschrieben. Diese Funktion liefert dann die oberen und unteren Referenzen bzw. Grenzwerte. Die Umsetzung erfolgt ähnlich wie in Fig. 4 gezeigt, mit dem Unterschied, dass nunmehr die n-fache Standardabweichung anstelle des Konfidenzintervalls verwendet wird.

Eine weitere Möglichkeit Grenzwerte festzulegen, besteht darin, die gewünschte Sensitivität bzw. Spezifität des Verfahrens festzulegen. Wie bei fast allen analytischen oder diagnostischen Verfahren kommt es auch bei dem erfindungsgemäßen Verfahren zu Fehleinschätzungen. Es kann vorkommen, dass bei Proben, die keine Störstoffe enthalten, auf einen störstoffbedingten Messartefakt geschlossen wird ("falsch positive"), und/oder dass bei Proben, die Störstoffe enthalten diese nicht erkannt erden "falsch negative").

Die Sensitivität eines Verfahrens liefert die Information, wie viele positive Proben (also Proben, die Störstoff beinhalten oder noch spezieller Proben, die Störstoff beinhalten, der die Bestimmung des eigentlichen Analyten über ein akzeptables Maß hinaus verfälscht) als solche erkannt werden. In diesem Fall würde die Sensitivität des Verfahrens den Anteil der Proben mit Störstoff bzw. störstoffbedingten Messartefakt bezeichnen, der unter allen gemessenen Proben mit entsprechendem Störstoff korrekt erkannt wird. Dies wird durch die Gleichung

$$\text{Sensitivität} = (\text{Detektierte Proben mit Störstoff/Gesamtzahl der gemessenen Proben mit Störstoff}) (\%)$$

wiedergegeben. Die Spezifität eines Verfahrens liefert eine Kenngröße dafür, wie viel falsch Positive zu erwarten sind. In diesem Fall heißt dies, wie viele Proben als störstoffbedingt verfälscht eingestuft werden, obwohl sie nicht durch Störstoffe beeinträchtigt sind. Dies wird durch die Gleichung

$$\text{Spezifität} = (\text{Proben bei denen kein Störstoff detektiert wurde}) / \text{Gesamtzahl der gemessenen Proben ohne Störstoff}) (\%)$$

wiedergegeben. Die Sensitivität und Spezifität des Verfahrens kann durch die Wahl von Grenzwerten festgelegt werden.

Diese können in Abhängigkeit der Anforderungen an die Sensitivität und Spezifität und aus Erfahrungswerten der in einem Probenkollektiv zu erwartenden Störstoffe angepasst werden. Zum Beispiel können Kalibrationsmesswerte für nicht mit Störstoff verunreinigte Proben verschiedener Konzentration generiert und mit Kalibrationsmesswerten für Proben, die Störstoffe enthalten, verglichen werden. Die Grenzwerte für Spezifität und Sensitivität werden dann so festgelegt, dass eine saubere Diskriminierung zwischen verfälschten und nicht verfälschten Proben möglich wird.

Ferner ist bevorzugt vorgesehen, dass die optische Bestimmung des mindestens einen Analyten und/oder die Messung der optischen Eigenschaften der Referenzprobe in einem Behältnis ausgewählt aus der Gruppe enthaltend Küvette, Mikrotiterplatte, Reagenzglas, Objektträger, Detektionschip, etc. durchgeführt wird.

## Ausführungsbeispiele

Für die Untersuchungen wurden folgende Materialien von den angegebenen Firmen verwendet. Rinderserumalbumin (BSA; A7030-50G; Batch 124K0597) und Nikotinamid-Adenin-Dinukleotid (NAD), Produktnummer 43410; Lot. 42606158) waren von Sigma (Taufkirchen, Deutschland). Hepes (Katalognununer 441475K; Lot K35477084 647) war von BDH Chemical (Poole,UK). Triton X 100 (Katalognummer 1.08603.1000), Glycin (Katalognummer 1.04201.1000; Lot K34245201515),) waren von Merck (Darmstadt, Deutschland). Das Konzentrat des CBB Reagenz (Protein Assay; Dye Reagent Concentrate) (Cat. No. 500-0006; Lot. No 105341) war von Bio-Rad (München, Deutschland). PS Mikroplatten 96 Weil (Catalog No. 655 101; Lot 03 26 01 03; F-Form) waren von Greiner Bio-one (Frickenhausen, Deutschland). Es wurde das Spektralphotometer Spectra Max Plus von Molecular Devices verwendet. Versuche wurden wie folgt beschrieben durchgeführt:

Es wurde eine wässrige BSA-Stammlösung mit einer Konzentration von 100 $\mu$g/ml hergestellt. BSA-Kalibratoren von 100, 80, 60, 40, 20 und 10 $\mu$g/ml wurden durch entsprechende Verdünnungen mit Wasser hergestellt. Bei dem Kalibrator ohne BSA handelte es sich um Wasser. CBB-Lösung wurde durch eine 1:4 Verdünnung des CBB-Konzentrats mit Wasser hergestellt. 60 $\mu$l Probe wurden in ein Well einer MTP vorgelegt und hiernach 240 $\mu$l CBB-Lösung zugegeben. Nach ca. 10 Minuten Inkubation bei Raumtemperatur wurden spektrophotometrische Bestimmungen durchgeführt. Spektren wurden in der Regel zwischen 400 - 650 nm in Schritten von 2 um aufgenommen. In einer speziellen Variante der CBB-Lösung befindet sich Triton X-100. Dieses Reagenz soll die Sensitivität von Proteinbestimmungen erhöhen und wurde hergestellt, indem CBB-Lösung so mit Triton X-100 versetzt wurde, dass die Konzentration des Triton X-100 0,008 % (v/v) betrug.

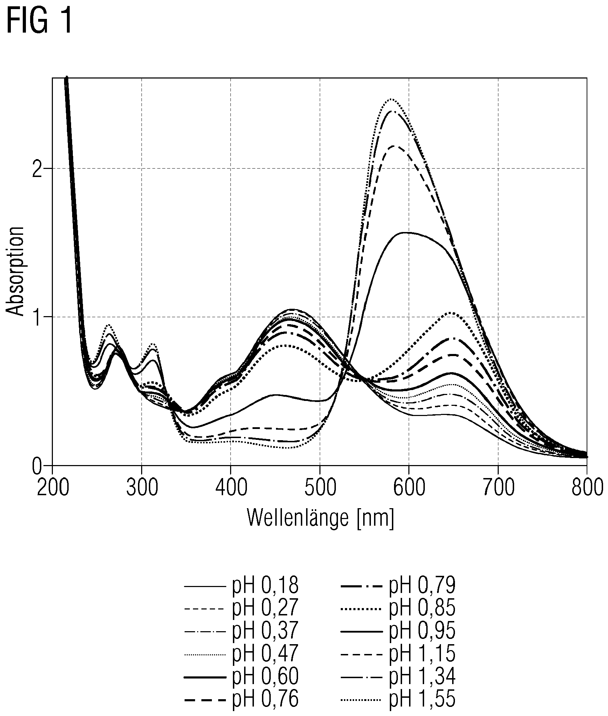

Entsprechende Störstoffmengen wurden zu dem in der Kavität vorgelegten BSA bzw. Wasser zugegeben und anschließend mit CBB-Lösung versetzt. Anhand von Fig. 1 wird deutlich, dass die Absorptionsmaxima oder Absorptionsschultern der zweifach protonierten und der einfach deprotonierten Form bei ca. 650, 470, 310 und 270 nm liegen. Isosbestische Punkte beim Übergang der zweifach protonierten in die einfach deprotonierte Form liegen bei ca. 550 und 340 nm. Bei einer weiteren Erhöhung des pH-Wertes kommt es zu einer hypsochromen Verschiebung, d.h. Verschiebung in den kürzerwelligen Bereich durch den Übergang der einfach deprotonierten in die zweifach deprotonierte Form. Dieses CCB-Anion besitzt Absorptionsmaxima bei ca. 580, 400 und 265 nm. Des Weiteren gewinnt die Absorptionsschulter bei ca. 310 nm an Intensität, um schließlich eine eigene Absorptionsbande mit einem Maximum in diesem Wellenlängenbereich auszubilden.

Isosbestische Punkte beim Übergang der einfach deprotonierten in die zweifach deprotonierte Form liegen bei ca. 530 und 330 nm. Dieser Übergang ist bei der Bindung des Farbstoffes an Proteine bei der Verwendung üblicher Pufferlösung mit einem pH-Wert von circa 0,77 entscheidend.

## 1.Proteinbestimmung mit CBB

Die Bestimmung der Proteinkonzentration erfolgt über eine Kalibration, beispielsweise über eine Eichgerade. Absorptionswerte von Kalibratoren mit bekannter BSA-Konzentration werden zur Bestimmung der BSA- oder Proteinkonzentration in unbekannten Proben herangezogen. Bei der Proteinbestimmung mittels CBB wird in der Regel die Absorption bei 595 nm oder der Quotient der Absorptionen bei 595 und 470 nm verwendet ("initiale Ratio").

Tabelle 1 zeigt die Wiederfindung einer vorgegebenen BSA-Konzentration von 40 $\mu$g/ml oder einer Probe ohne BSA mittels Absorptionsbestimmung bei 595 nm oder der Quotientenbildung bei 595 und 470 nm in Abwesenheit oder Anwesenheit verschiedener Substanzen unterschiedlicher Konzentration. Bei den Versuchen wurde Standard CBB eingesetzt. Es wird deutlich, dass ohne störende Substanzen wie Glycin, Hepes, SDS, Triton X-100 oder NAD, die BSA-Konzentration einer Probe mit einer vorgegebenen BSA-Konzentration von 40 $\mu$g/ml oder die einer Probe ohne BSA gut wiedergefunden wird. Allerdings führt das Vorhandensein von Störstoffen zu groben Fehlbestimmungen.

**Tabelle 1**

| | MW Abs 595 / 470 nm | Berechnete BSA Konz. [μg/ml] | "Soll' BSA [μg/ml] | MW Abs 595 nm | Berechnete BSA Konz. [μg/ml] | "Soll' BSA [μg/ml] |
|---|---|---|---|---|---|---|
| ohne Glycin | 1,29 | 38,72 | 40 | 0,84 | 44,60 | 40 |
| 0,1 M Glycin | 1,72 | 61,23 | 40 | 1,08 | 75,68 | 40 |
| 0,2 M Glycin | 4,08 | 182,24 | 40 | 1,34 | 109,14 | 40 |
| 0,4 M Glycin | 12,23 | 600,01 | 40 | 1,17 | 87,56 | 40 |
| ohne Glycin | 0,55 | 1,19 | 0 | 0,45 | -5,31 | 0 |
| 0,1 M Glycin | 0,83 | 15,58 | 0 | 0,67 | 22,75 | 0 |
| 0,2 M Glycin | 3,32 | 143,31 | 0 | 1,32 | 107,53 | 0 |
| 0,4 M Glycin | 14,03 | 692,08 | 0 | 1,35 | 111,27 | 0 |
| ohne Hepes | 1,27 | 37,89 | 40 | 0,83 | 43,79 | 40 |
| 0,1 M Hepes | 2,64 | 108,40 | 40 | 0,97 | 62,03 | 40 |
| 0,15 M Hepes | 3,91 | 173,12 | 40 | 1,05 | 72,58 | 40 |
| 0,2 M Hepes | 6,21 | 291,52 | 40 | 1,10 | 79,09 | 40 |
| ohne Hepes | 0,55 | 0,90 | 0 | 0,46 | -5,04 | 0 |
| 0,1 M Hepes | 1,50 | 49,81 | 0 | 0,74 | 31,87 | 0 |
| 0,15 M Hepes | 3,19 | 136,27 | 0 | 1,05 | 71,88 | 0 |
| 0,2 M Hepes | 5,97 | 278,92 | 0 | 1,25 | 97,60 | 0 |
| ohne SDS | 1,30 | 39,58 | 40 | 0,83 | 43,60 | 40 |
| 0,1 % SDS | 1,30 | 39,31 | 40 | 0,60 | 13,06 | 40 |
| 0,2 % SDS | 1,33 | 41,02 | 40 | 0,52 | 3,55 | 40 |
| 0,4 % SDS | 1,42 | 45,72 | 40 | 0,37 | -15,58 | 40 |
| ohne SDS | 0,60 | 3,38 | 0 | 0,46 | -3,99 | 0 |

(fortgesetzt)

| | MW Abs 595 / 470 nm | Berechnete BSA Konz. [µg/ml] | "Soll' BSA [µg/ml] | MW Abs 595 nm | Berechnete BSA Konz. [µg/ml] | "Soll' BSA [µg/ml] |
|---|---|---|---|---|---|---|
| 0,1 % SDS | 1,24 | 36,31 | 0 | 0,72 | 29,15 | 0 |
| 0,2 %SDS | 1,33 | 41,08 | 0 | 0,52 | 3,34 | 0 |
| 0,4 % SDS | 1,42 | 45,56 | 0 | 0,37 | -16,56 | 0 |
| ohne Triton | 1,07 | 44,596 | 40 | 1,0014 | 54,976 | 40 |
| 0,05 % Triton | 3,15 | 195,637 | 40 | 1,831 | 153,738 | 40 |
| 0,1 % Triton | 9,19 | 633,231 | 40 | 2,6298 | 248,833 | 40 |
| 0,5% Triton | 20,72 | 1468,769 | 40 | 2,5447 | 238,702 | 40 |
| ohne Triton | 0,43 | -1,517 | 0 | 0,4622 | -9,214 | 0 |
| 0,05 % Triton | 0,50 | 3,497 | 0 | 0,545 | 0,643 | 0 |
| 0,1 % Triton | 7,15 | 485,114 | 0 | 2,5668 | 241,333 | 0 |
| 0,5% Triton | 15,73 | 1106,703 | 0 | 2,5177 | 235,488 | 0 |
| ohne NAD | 1,051 | 43,326 | 40 | 0,9444 | 48,190 | 40 |
| 0,055 µM NAD | 1,159 | 51,115 | 40 | 0,8857 | 41,202 | 40 |
| 0,278 µM NAD | 1,553 | 79,708 | 40 | 0,9301 | 46,488 | 40 |
| 0,55 µM NAD | 2,380 | 139,622 | 40 | 0,8773 | 40,202 | 40 |
| ohne NAD | 0,462 | 0,627 | 0 | 0,522 | -2,095 | 0 |
| 0,055 µM NAD | 2,759 | 167,097 | 0 | 1,6801 | 135,774 | 0 |
| 0,278 µM NAD | 0,547 | 6,758 | 0 | 0,4232 | -13,857 | 0 |
| 0,55 µM NAD | 0,752 | 21,680 | 0 | 0,4162 | -14,690 | 0 |

**2. Proteinbestimmung mit CBB in Kombination mit Triton X-100**

Bei einer bestimmten Variante der Proteinbestimmung mittels CBB wird Triton X-100 dem Reagenz zugesetzt, Dies soll die Empfindlichkeit der Bestimmung erhöhen. Tabelle 2 zeigt die Wiederfindung einer vorgegebenen BSA-Konzentration von 40 μg/ml oder einer Probe ohne BSA mittels Absorptionsbestimmung bei 595 nm oder der Quotientenbildung bei 595 und 470 nm in Abwesenheit oder Anwesenheit verschiedener Substanzen unterschiedlicher Konzentration. Bei den Versuchen wurde CBB mit einer Triton X 100 -Konzentration von 0,008% eingesetzt. Es wird deutlich, dass ohne weitere störende Substanzen, die BSA-Konzentration einer Probe mit einer vorgegebenen PSA-Konzentration von 40 μg/ml oder die einer Probe ohne BSA gut wiedergefunden wird. Obwohl im Reagenz Triton X-100 vorhanden ist, kann das Vorhandensein weiterer Mengen von Triton X-100 in der Probe wiederum zu groben Fehlbestimmungen führt.

**Tabelle 2**

|  | MW Abs 595 / 470 nm | Berechnete BSA Konz. [μg/ml] | "Soll' BSA [μg/ml] | MW Abs 595 nm | Berechnete BSA Konz. [μg/ml] | "Soll' BSA [μg/ml] |
|---|---|---|---|---|---|---|
| ohne Triton | 0,98 | 35,82 | 40 | 0,85 | 40,65 | 40 |
| 0,02 % Triton | 6,56 | 393,92 | 40 | 2,45 | 129,92 | 40 |
| 0,05 % Triton | 12,62 | 782,32 | 40 | 2,94 | 161,54 | 40 |
| 0,1 % Triton | 16,55 | 1034,08 | 40 | 3,02 | 166,93 | 40 |
| ohne Triton | 0,46 | 2,50 | 0 | 0,49 | 4,45 | 0 |
| 0,02 % Triton | 5,85 | 348,21 | 0 | 2,40 | 127,10 | 0 |
| 0,05 % Triton | 12,46 | 771,82 | 0 | 2,90 | 159,24 | 0 |
| 0,1 % Triton | 14,06 | 874,68 | 0 | 2,88 | 158,04 | 0 |

Grundsätzlich sind Proben mit besonders hohen Absorptionswerten an sich schon auffällig. Bei Proben, die eine Absorption von X überschreiten, wird in aller Regel eine Verdünnung vorgenommen und noch einmal gemessen, da sich das Absorptionsverhalten oberhalb dieser Schwelle nicht mehr linear zur Konzentration des jeweiligen Indikators verhält.

Durch Störstoffe verursachte Messartefakte können in aller Regel jedoch nur detektiert werden, wenn ihr absorptionswert außerhalb des Wertebereichs liegt, der durch vorheriges kalibrieren mit Proben bekannten Inhalts festgelegt wurde, wobei diese Kalibrationswerte die maximal bzw. minimal zu erwartenden Analytkonzentrationen wiederspiegeln müssen.

**ZEICHNUNGEN**

Fig. 1: Abhängigkeit des Spektrums von Coomassie Brilliant Blau (CBB) vom pH-Wert des Mediums.

Protein- bzw. Albuminbestimmungen mit CBB werden in der Regel bei einer Wellenlänge von etwa 595 nm durchgeführt. Die Differenz der Absorption zwischen zwei Formen des von CBB, der freien und der proteingehundenen, ist hier am größten. Es wird beschrieben, dass der Farbstoff über van-der-Waals und hydrophobe Wechselwirkungen und insbesondere mittels Interaktionen mit basischen Aminosäuren, wie Arginin, Lysin und Histidin an Proteine binden.

Die Anzahl der Farbstoffmoleküle soll mit der Anzahl der positiven Ladungen der Proteine korrelieren. Freie Aminosäuren, Peptide und niedermolekulare Proteine unter 3000 glmol reagieren in der Regel nicht mit CBB.

Abgesehen von anderen Einflüssen auf die spektralen Eigenschaften bei der Bindung der Farbstoffe an Proteine, wird davon ausgegangen, dass die Änderung der spektralen Eigenschaften insbesondere mit einer Reaktion einhergeht, die durch Proteine vermittelt wird. Durch die Wechselwirkung mit Proteinen kommt es zu einer Änderung des protolytischen Gleichgewichtes der Farbstoffe. Diese proteinabhängige Säure-Basereaktion geht mit einer deutlichen Änderung spektrophotometrischer Eigenschaften von CBB einher.

CBB liegt im stark sauren wässrigen Milieu als zweifach protoniertes Kation vor ($AH_2^+$). Bei CBB kann damit eine zweistufige Deprotonierung erfolgen. Die pK-Werte dieser Reaktionen liegen dicht beieinander. CBB wird hierbei von einem einfach positiv geladenen, roten (470 nm) Kation ($AH_2^+$) bei pH 0,3 via einer grünen (650 nm), neutralen Substanz (AH) in ein einfach negativ geladenes, blaues (595 um) Anion ($A^-$) bei pH 1,3 in zwei Schritten deprotoniert.

Die Messungen erfolgten mit einem Spektralphotometer unter Verwendung von Quarzküvetten. 3 ml einer Coomassie Brilliant Blau Lösung mit einem pH-Wert von 0,76 wurden schrittweise durch Zugabe von 150 bis 300 $\mu$l 1N Natronlauge bis auf einen pH-Wert von 1,55 titriert. Die Temperatur nahm hierbei von 21 auf 31°C zu. Die Probe wurde um ca. 40 % verdünnt. Des Weiteren wurden 3ml einer Coomassie Brilliant Blau Lösung mit einem pH-Wert von 0,76 schrittweise durch Zugabe von 150 bis 200 $\mu$l 10 N Salzsäurelösung bis auf einen pH-Wert von 0,18 angesäuert. Die Temperatur nahm hierbei von 21 auf 29° C zu. Die Probe wurde um ca. 23 % verdünnt. Die Messungen erfolgten etwa 10 Minuten nach Zugabe der Natronlauge bzw. der Salzsäurelösung. Der Einfluss der Temperaturänderung ist zu vernachlässigen. Es ist gut erkennbar, dass die Indikatorreaktion im Bereich von ca. 340 nm und im bereich von 520 - 520 nm isosbestische Punkte bzw. Bereich aufweist. Als Messwellenlängen werden im allgemeinen 594 nm und/oder 470 nm verwendet. Häufig wird auch bei beiden Wellenlängen simultan oder sukzessive gemessen und ein Quotient beider Messwerte gebildet ("initiale Ratio"). In einem Ausführungsbeispiel wird als Referenzwellenlänge 540 nm verwendet. Diese Wellenlänge bietet sich insbesondere an, da branchenübliche Geräte häufig Filter verwenden, die Messungen bei der Wellenlänge von 540 nm erlauben.

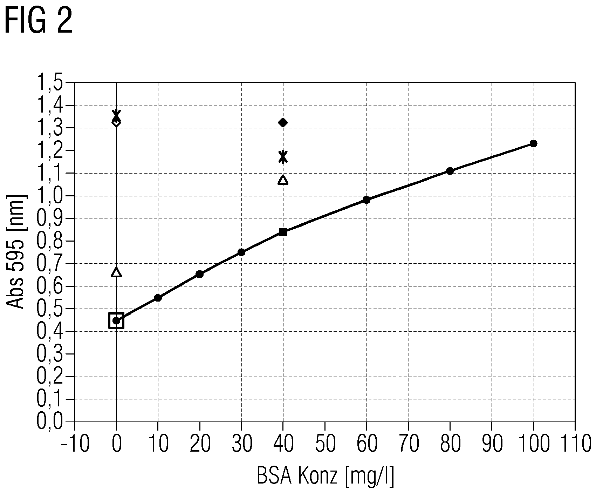

Fig. 2: Wiederfindung von Proben mit 0- und 40 mg/L BSA mittels Absorptionsbestimmung bei 595 nm in Abwesenheit oder Anwesenheit von Glycin.

Es wurde zunächst eine Eichkurve mit bekannten Konzentrationen von BSA erstellt (CBB-Reagenz, 595 nm). Dabei ergibt sich, dass das Verhältnis zwischen der Absorption bei 595 nm und der BSA-Konzentration nicht ganz linear ist. Die Sollwerte (ohne Glycin) für 0 mg/l und 40 mg/l BSA sind mit Vierecken markiert. Durch Zugabe von 0,1 M (Dreieck), 0,2 M (Stern) und 0,4 M Glycin (Diamant) erhöhen sich die Absorptionswerte sowohl bei der Probe ohne BSA als auch bei der Probe mit BSA. Schon die Anwesenheit von 0,1 Glycin führt zu einer starken Abweichung des Sollwertes bei 0 und 40 mg/l BSA. Für den Fall, dass die konkreten Messwerte deutlich außerhalb des aufgrund der Kalibrationskurve zu erwartenden Absorptionsbereichs, kann auf einen Messartefakt durch Störstoffe geschlossen werden. Für den Fall, dass die konkreten Messwerte nicht deutlich außerhalb des aufgrund der Kalibrationskurve zu erwartenden Absorptionsbereich liegen, fällt ein Messartefakt durch Störstoffe nicht auf.

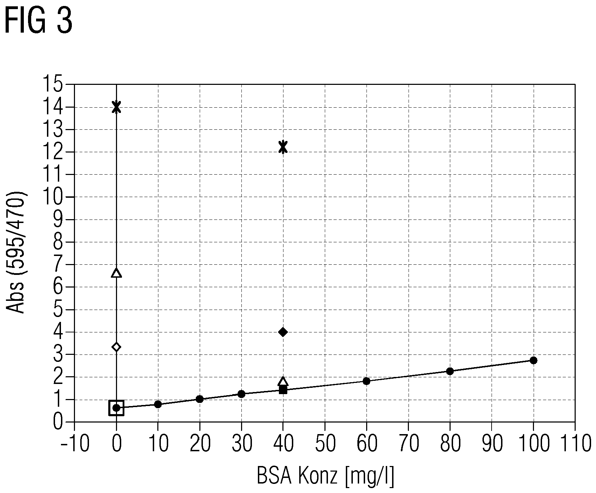

Fig. 3: Wiederfindung von Proben mit 0- und 40 mg/L BSA mittels Doppelbestimmung bei 595 nm und 470 nm (Messwellenlängen) in Abwesenheit oder Anwesenheit von Glycin.

Fig. 3 zeigt ähnliche Ergebnisse wie Fig. 2. Die Sollwerte (ohne Glycin) sind mit Vierecken markiert. Durch Zugabe von 0,1 M (Dreieck), 0,2 M (Stern) und 0,4 M Glycin (Diamant) erhöht sich der Quotient Abs [595/470] zunehmend sowohl bei der Probe ohne BSA als auch bei der Probe mit BSA. Schon die Anwesenheit von 0,1 Glycin führt zu einer starken Abweichung des Sollwertes bei 0 und 40 mg/l BSA, Im Unterschied zu Fig. 2 wurden in Fig. 3 sowohl für die Kalibrierung als auch für die konkreten Messungen Doppelbestimmungen bei 595 nm und 470 nm durchgeführt und als Quotient Abs [595/470] ausgedruckt. Dabei ergibt sich, anders als bei der Bestimmung nur bei 595 nm ein lineares Verhältnis zwischen dem Quotienten und der BSA-Konzentration.

Fig. 2 und 3 machen deutlich, dass die Tatsache, dass ein konkreter Messwert innerhalb des aufgrund einer Kalibrationskurve zu erwartenden Absorptionsbereichs liegt, keine Möglichkeit bietet, um fehlerbehaftete Messungen auszuschließen. Wird erfindungsgemäß jedoch zusätzlich eine Messung bei mindestens einer Referenzwellenlänge durchgeführt (siehe unten), lassen sich fehlerbehaftete Messungen besser ausschließen.

Fig. 4: Verhältnis zwischen Absorption bei 440 nm (Referenzwellenlänge) und Absorption bei 594 nm (Messwellenlänge, die zur Bestimmung der BSA-Konzentration verwendet wird) und der Einfluss des Störstoffs Glycin.

In Fig. 4 wurde zunächst eine Kalibrationskurve erstellt, bei welcher für störstofffreie Proben bekannter Konzentration (CBB + 0, 10, 20, 30, 60, 80 und 100 $\mu$g/ml BSA) die Absorption bei 440 nm (Referenzwellenlänge) und 594 nm (Messwellenlänge) gemessen wurde. Die Werte wurden gegeneinander geplottet, und anschließend wurde ein linearer Kurvenfit durchgeführt sowie Konfidenzintervalle berechnet. Anschließend wurden gezielt verunreinigte Proben in ähnlicher Weise bei 440 nm (Referenzwellenlänge) und 594 nm (Messwellenlänge) gemessen. Die Proben, die Störstoff (0,1M Glycin) enthalten (Kreis) liegen außerhalb der Konfidenzintervalle und sind somit korrekt als fehlerhaft identifiziert.

Bei den Konfidenzintervalle handelt es sich um den 95%igen Konfidenzbereich bzw. den 95%igen Prädiktionsbereich der mittels einer Linearregression (y=-0,37x + 1,12; R =-,99687) bestimmt wurde.

Der obere 95%ige Prädiktionsbereich kann durch ein Polynom 2. Ordnung (Y =A + $B_1$x + $B_2$x$^2$) mit der Gleichung y = 1, 15664-0,40253 x + 0,01693 x$^2$ beschrieben werden. Der untere 95%ige Prädiktionsbereich kann durch ein Polynom 2. Ordnung mit der Gleichung y = 1,08494 - 0,34598 x + 0,01693 x$^2$ beschrieben werden.

Der Einfachheit halber kann in diesem Fall der obere 95%igen Prädiktionsbereich annähernd gut durch eine Linearregression (Y = A+ B ' X) mit der Gleichung y = -0,3729 x + 1,145 beschrieben werden. Für den unteren 95%igen Prädiktionsbereich liefert eine Linearregression die Gleichung y = -0,3756 x + 1,096. Die Korrelationskoeffizienten R beider Linearregressionen betragen -0,99993.

Entscheidend ist, dass Werte, die oberhalb oder unterhalb der entsprechenden Referenzbereiche liegen, auf fehlerhafte Bestimmungen hindeuten. Dies wird im beschriebenen Ausführungsbeispiel bei den Proben mit Störfaktor (z.B. 0,1 M Glycin) eindeutig gezeigt. Die fehlerhaften Bestimmungen von 22,75 bzw. 75,68 μg/mL BSA anstatt 0 und 40 μg/mL BSA (siehe Tabelle 1) werden erkannt.

Wird der oben erwähnte Referenzbereich gewählt, sollte beispielsweise mit einer Absorption von 0,72 bei 594 nm der Probe ohne BSA und 0,1 MGlycin mit dem Referenzalgorithmus basierend .auf der Linearregression die Absorption bei 440 nm zwischen

$$y = -0,3729 * 0,72 + 1, 145 = 0,877$$

und

$$y = -0,3756 * 0,72 + 1,096 = 0,826$$

liegen. Mit einem Absorptionswert bei 440 nm von 0,7 ist dies jedoch nicht der Fall.

Es ist ebenfalls denkbar, dass andere Algorithmen verwendet werden. Zum Beispiel könnten die einfachen, zweifachen oder dreifachen Standardabweichungen der einzelnen Kalibratoren des Standards der Eichreihe verwendet werden, um einen Referenzbereich festzulegen. Der entsprechende Wert wird zum Mittelwert addiert oder von diesem subtrahiert. Die Abhängigkeit der Werte oberhalb der Mittelwerte und die der Werte unterhalb der Mittelwerte von der Absorption, z.B. 594 nm, oder einem entsprechenden Parameter wird durch eine Funktion, beispielsweise ein Polynom oder eine Linearregression beschrieben. Diese Funktion liefert dann die oberen und unteren Referenzen bzw. Grenzwerte.

Fig. 4: Verhältnis zwischen Absorption bei 440 nm (Referenzwellenlänge) und Quotient Abs [595/470] (initiale Ratio zweier Messwellenlängen) in Abwesenheit oder Anwesenheit des Störstoffs Glycin.

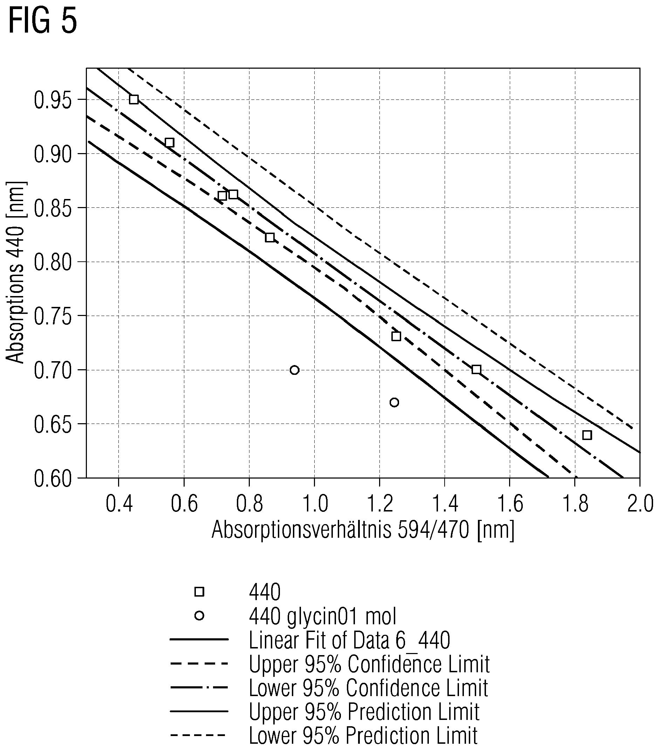

Fig. 5 zeigt ähnliche Ergebnisse wie Fig. 4, jedoch wurde hier für die Erstellung der Kalibrationskurve die Absorption bei 440 nm (Referenzwellenlänge) gegen den Quotient Abs [595/470] (initiale Ratio zweier Messwellenlängen) geplottet. Auch hier liegen die Proben, die Störstoff (0,1M Glycin) enthalten (Kreis), außerhalb der Konfidenzintervalle und sind somit korrekt als fehlerhaft identifiziert.

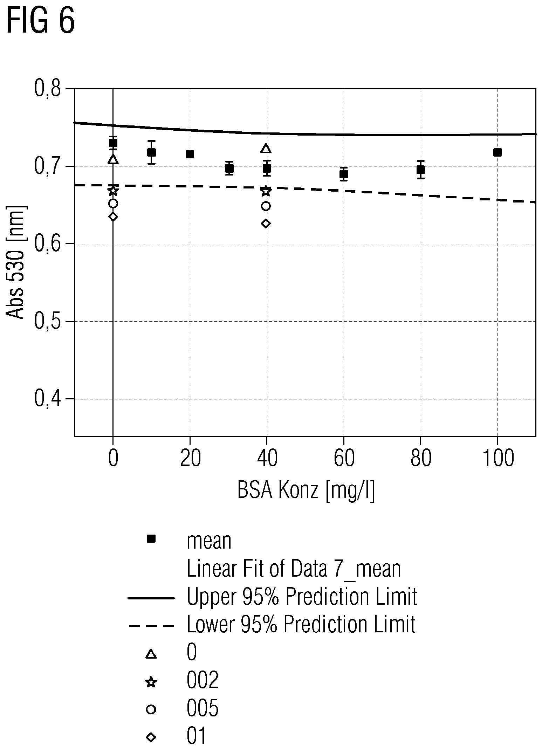

Fig. 6: Abhängigkeit der Absorption bei einer isosbestischen Wellenlänge 530 nm von der BSA-Konzentration und Einfluss unterschiedlicher Triton X-100-Konzentrationen

Die Triton X-100-Konzentrationen betrugen 0 % (▲), 0,02 % (*), 0,05 % (○) und 0,1 % (◊). Es wurde Coomassie Brilliant Blau (CBB) eingesetzt, das 0,008 % Triton X-100 enthält. Kein Triton X-100 befand sich in den Proben, deren Messergebnisse mit Dreiecken dargestellt sind. Die Fehlerbalken stellen die einfache Standardabweichung einer Dreifachbestimmung dar. Es wurde eine Linearregression durchgeführt und ein Prädiktionsbereich von 95 % ermittelt. Das heißt, 95 % der zu erwartenden Werte liegen innerhalb dieses Vorhersagebereiches.

Bei 530 nm handelt es sich, wie in Fig. 1 erkennbar, für Coomassie Brilliant Blau (CBB) um eine isosbestische Wellenlänge, d.h. um eine Wellenlänge, bei welcher sich die Absorption von CBB gegenüber dem einfallenden Licht nicht in Abhängigkeit von gebundenem Protein ändert. Anders als beispielsweise bei 440 nm erhält man also bei 530 nm bei Proben, die neben CBB nur verschiedene Konzentrationen von BSA enthalten, keine konzentrationsabhängige Absorptionsänderung, sondern stets eine mehr oder minder konstante Absorption, die sich vorwiegend nach der Konzentration des Indikatorfarbstoffes CBB richtet und im vorliegenden Beispiel bei ca. 0,675 liegt. Proben, die mit Störstoffen wie Triton X-100 verunreinigt sind, weisen, bei gleicher CBB-Konzentration, eine Abweichung von diesem Wert auf, die im vorliegenden Falle über der durch den Prädiktionsbereich von 95 % bestimmten Mindestabweichung liegen und daher als Indiz dafür gewertet werden, dass die optische Bestimmung durch Messartefakte verfälscht ist.

Die erfinderische Lehre lässt sich also, wie oben erkennbar, sowohl

a) mit einem Referenzwert (nämlich dann, wenn dieser bei gegebener Indikatorfabstoffkonzentration bei einer isosbestischen Wellenlänge gemessen wurde), als auch
b) mit einer Referenzkurve (nämlich dann, wenn diese bei gegebener Indikatorfabstoffkinzentration bei einer nicht-isosbestischen Wellenlänge gemessen wurde)

verwirklichen. Die Wahl, ob bei einer isosbestischen oder einer nicht-isosbestischen Wellenlänge gemessen wird, hängt u.A. von den vom jeweiligen Messgerät zur Verfügung gestellten Messwellenlängen ab.

## Patentansprüche

1. Verfahren zur optischen Bestimmung mindestens eines Analyten in einer Probe, bei welchem Verfahren mindestens ein Indikatorfarbstoff verwendet wird, der mindestens eine optische Eigenschaft bei mindestens einer gegebenen Lichtwellenlänge ("Messwellenlänge") in Abhängigkeit der Konzentration eines gegebenen Analyten ändert, wobei

   a) mindestens eine optische Eigenschaft der Probe bei mindestens einer Messwellenlänge bestimmt wird,
   b) mindestens eine optische Eigenschaft der Probe zusätzlich bei mindestens einer weiteren Lichtwellenlänge ("Referenzwellenlänge") bestimmt wird, und
   c) aus den beiden in den Schritten a) und b) ermittelten Messwerten ein arithmetisch berechneter Wert ermittelt wird,

   wobei

   d) der in Schritt c) arithmetisch berechnete Wert mit einer Referenzkurve verglichen wird, die anhand von Messwerten ("Kalibrationsmesswerten") ermittelt wurde, die bei Messung mindestens einer optischen Eigenschaft von Referenzproben bei der mindestens einen Messwellenlänge und der mindestens einen Referenzwellenlänge bestimmt wurden, wobei die Referenzproben ebenso wie die Probe mindestens einen Indikatorfarbstoff sowie bekannte Konzentrationen des Analyten enthalten,
   e) und wobei eine Mindestabweichung des in Schritt c) arithmetisch berechneten Werts von der Referenzkurve als Indiz dafür gewertet wird, dass die optische Bestimmung des mindestens einen Analyten durch Messartefakte verfälscht ist.

2. Verfahren zur optischen Bestimmung mindestens eines Analyten in einer Probe, bei welchem Verfahren mindestens ein Indikatorfarbstoff verwendet wird, der mindestens eine optische Eigenschaft bei mindestens einer gegebenen Lichtwellenlänge ("Messwellanlänge") in Abhängigkeit der Konzentration eines gegebenen Analyten ändert, wobei

   a) mindestens eine optische Eigenschaft der Probe bei mindestens einer Messwellenlänge bestimmt wird,
   b) mindestens eine optische Eigenschaft der Probe zusätzlich bei mindestens einer weiteren Lichtwellenlänge ("Referenzwellenlänge"), die in Bezug auf den Indikatorfarbstoff eine isosbestische Wellenlänge ist, bestimmt wird, und

   wobei
   der in Schritt b) durch Bestimmung der mindestens einen optischen Eigenschaft der Probe bei der Referenzwellenlänge erhaltene Messwert mit einem Referenzwert verglichen wird, der anhand von Messwerten ("Kalibrationsmesswerten") ermittelt wurde, die bei Messung mindestens einer optischen Eigenschaft von Referenzproben bei der mindestens einen Messwellenlänge und der mindestens einen Referenzwellenlänge bestimmt wurden, wobei die Referenzproben ebenso wie die Probe mindestens einen Indikatorfarbstoff sowie bekannte Konzentrationen des Analyten enthalten,
   und wobei eine Mindestabweichung des in Schritt b) durch Bestimmung der mindestens einen optischen Eigenschaft der Probe bei der Referenzwellenlänge erhaltenen Messwerts von dem Referenzwert als Indiz dafür gewertet wird, dass die optische Bestimmung des mindestens einen Analyten durch Messartefakte verfälscht ist.

3. Verfahren gemäß einem der Ansprüche 1 und 2, wobei bei der optischen Bestimmung die Konzentration mindestens eines Analyten in der Probe bestimmt wird.

4. Verfahren gemäß einem der vorhergehenden Ansprüche, wobei es sich bei dem Analyten um mindestens ein Biomolekül handelt, bevorzugt ausgewählt aus der Gruppe enthaltend Proteine, Peptide, Aminosäuren, Poly-, Oligo- oder Monosaccharide, Poly-, Oligo- oder Mononucleinsäuren, oder Lipide.

**5.** Verfahren gemäß einem der vorhergehenden Ansprüche, wobei es sich bei den zu bestimmenden optischen Eigenschaften des Indikatorfarbstoffs und/oder der Probe um Absorption und/oder Extinktion handelt.

**6.** Verfahren gemäß einem der vorhergehenden Ansprüche, wobei es sich bei dem Indikatorfarbstoff um einen Farbstoff ausgewählt aus der Gruppe enthaltend

- Coomassie Brilliant Blau (CBB)
- DIDNTB
- HABA
- Bromcresolgrün (BCG)
- Bromcresol Purple (BCP)
- Bromphenolblau (BPB)
- Tetrabromophenolblau (TBPB), und/oder
- Pyrogallolsulfonephthal

handelt.

**7.** Verfahren gemäß einem der vorhergehenden Ansprüche, wobei der Messartefakt mindestens durch einen Störstoff verursacht wird.

**8.** Verfahren gemäß Anspruch 1, wobei es sich bei der Referenzwellenlänge in Bezug auf den Indikatorfarbstoff um eine Wellenlänge handelt, bei welcher der Indikatorfarbstoff weder ein Absorptionsmaximum noch ein Absorptionsminimum aufweist.

**9.** Verfahren gemäß Anspruch 1, wobei die Referenzkurve durch

- Inter- und/oder Extrapolation
- lineare Regression, und/oder
- Kurvenfit mittels einem Polynom zweiter oder höherer Ordnung

der gemäss Schritt d) gewonnenen Kalibrationsmesswerte ermittelt wurde.

**10.** Verfahren gemäß einem der vorhergehenden Ansprüche, wobei die optische Bestimmung des mindestens einen Analyten und/oder die Messung der optischen Eigenschaften der Referenzprobe in einem Behältnis ausgewählt aus der Gruppe enthaltend Küvette, Mikrotiterplatte, Reagenzglas, Objektträger und Detektionschip durchgeführt wird.

## Claims

**1.** Method for optically determining at least one analyte in a sample, in which method at least one indicator dye is used which changes at least one optical property at at least one given light wavelength ("measurement wavelength") in dependence on the concentration of a given analyte, wherein

a) at least one optical property of the sample is determined at at least one measurement wavelength,
b) at least one optical property of the sample is additionally determined at at least one further light wavelength ("reference wavelength"), and
c) an arithmetically calculated value is ascertained from the two measured values ascertained in steps a) and b),

wherein

d) the value arithmetically calculated in step c) is compared to a reference curve which was ascertained on the basis of measured values ("calibration measured values") which were determined upon measurement of at least one optical property of reference samples at the at least one measurement wavelength and the at least one reference wavelength, wherein the reference samples and the sample contain at least one indicator dye and known concentrations of the analyte,
e) and wherein a minimum deviation of the value arithmetically calculated in step c) from the reference curve is evaluated as an indication that the optical determination of the at least one analyte is corrupted by measurement artifacts.

2. Method for optically determining at least one analyte in a sample, in which method at least one indicator dye is used which changes at least one optical property at at least one given light wavelength ("measurement wavelength") in dependence on the concentration of a given analyte, wherein

a) at least one optical property of the sample is determined at at least one measurement wavelength,
b) at least one optical property of the sample is additionally determined at at least one further light wavelength ("reference wavelength"), which is an isosbestic wavelength with respect to the indicator dye, and

wherein
the measured value obtained in step b) by determining the at least one optical property of the sample at the reference wavelength is compared to a reference value which was ascertained on the basis of measured values ("calibration measured values") which were determined upon measurement of at least one optical property of reference samples at the at least one measurement wavelength and the at least one reference wavelength, wherein the reference samples and the sample contain at least one indicator dye and known concentrations of the analyte, and wherein a minimum deviation of the measured obtained in step b) by determining the at least one optical property of the sample at the reference wavelength from the reference value is evaluated as an indication that the optical determination of the at least one analyte is corrupted by measurement artifacts.

3. Method according to either of Claims 1 and 2, wherein the concentration of at least one analyte in the sample is determined during the optical determination.

4. Method according to any one of the preceding claims, wherein the analyte is at least one biomolecule, preferably selected from the group containing proteins, peptides, amino acids, polysaccharides, oligosaccharides, or monosaccharides, polynucleic acids, oligonucleic acids, or mononucleic acids, or lipids.

5. Method according to any one of the preceding claims, wherein the optical properties to be determined of the indicator dye and/or of the sample relate to absorption and/or extinction.

6. Method according to any one of the preceding claims, wherein the indicator dye is a dye selected from the group containing

- Coomassie brilliant blue (CBB)
- DIDNTB
- HABA
- bromcresol green (BCG)
- bromcresol purple (BCP)
- bromphenol blue (BPB)
- tetrabromophenol blue (TBPB), and/or
- pyrogallol sulfonephthalein.

7. Method according to any one of the preceding claims, wherein the measurement artifact is caused by at least one interfering material.

8. Method according to Claim 1, wherein the reference wavelength with respect to the indicator dye is a wavelength at which the indicator dye has neither an absorption maximum nor an absorption minimum.

9. Method according to Claim 1, wherein the reference curve was determined by

- interpolation and/or extrapolation,
- linear regression, and/or
- curve fit by means of a second-order or higher polynomial

of the calibration measured values obtained according to step d).

10. Method according to any one of the preceding claims, wherein the optical determination of the at least one analyte and/or the measurement of the optical properties of the reference sample is carried out in a container selected from the group including cuvette, micro-titration plate, test tube, slide, and detection chip.

**Revendications**

1. Procédé de détermination optique d'au moins un analyte dans un échantillon, procédé dans lequel on utilise au moins un indicateur coloré qui modifie au moins les propriétés optiques à au moins une longueur d'onde de la lumière donnée ("longueur d'onde de mesure") en fonction de la concentration d'un analyte donné, dans lequel

    a) on détermine au moins une propriété optique de l'échantillon à au moins une longueur d'onde de mesure,
    b) on détermine au moins une propriété optique de l'échantillon en outre, à au moins une autre longueur d'onde de la lumière ("longueur d'onde de référence"), et
    c) à partir des deux valeurs de mesure déterminées dans les stades a) et b), on détermine une valeur calculée arithmétiquement,

    dans lequel

    d) on compare la valeur calculée arithmétiquement au stade c) à une courbe de référence qui a été déterminée à l'aide de valeurs de mesure ("valeurs de mesure d'étalonnage"), qui ont été déterminées lors de la mesure d'au moins une propriété optique d'échantillons de référence à la au moins une longueur d'onde de mesure et à la au moins une longueur d'onde de référence, les échantillons de référence, tout comme l'échantillon, contenant au moins un indicateur coloré ainsi que des concentrations connues de l'analyte,
    e) et dans lequel on exploite l'écart le plus petit de la valeur calculée arithmétiquement au stade c) à la courbe de référence comme indice que la détermination optique du au moins un analyte est faussée par des artéfacts de mesure.

2. Procédé de détermination optique d'au moins un analyte dans un échantillon, procédé dans lequel on utilise au moins un indicateur coloré qui modifie au moins les propriétés optiques à au moins une longueur d'onde de la lumière donnée ("longueur d'onde de mesure") en fonction de la concentration d'un analyte donné dans lequel

    a) on détermine au moins une propriété optique de l'échantillon à au moins une longueur d'onde de mesure,
    b) on détermine au moins une propriété optique de l'échantillon, en outre, à au moins une autre longueur d'onde de la lumière ("longueur d'onde de référence") qui, en ce qui concerne l'indicateur coloré, est une longueur d'onde isobestique, et

    dans lequel
    on compare la valeur de mesure, obtenue au stade b) par détermination de la au moins une propriété optique de l'échantillon à la longueur d'onde de référence, à une valeur de référence qui a été déterminée au moyen de valeurs de mesure ("valeurs de mesure d'étalonnage") qui ont été déterminées lors de la mesure d'au moins une propriété optique d'échantillons de référence à la au moins une longueur d'onde de mesure et à la au moins une longueur d'onde de référence, les échantillons de référence, tout comme l'échantillon, contenant au moins un indicateur coloré ainsi que des concentrations connues de l'analyte,
    et dans lequel on exploite l'écart le plus petit de la valeur de mesure obtenue au stade b) par détermination de la au moins une propriété optique de l'échantillon à la longueur d'onde de référence, à la valeur de référence comme indice que le détermination optique du au moins un analyte est faussée par des artéfacts de mesure.

3. Procédé suivant l'une des revendications 1 et 2, dans lequel, lors de la détermination optique, on détermine la concentration d'au moins un analyte dans l'échantillon.

4. Procédé suivant l'une des revendications précédentes, dans lequel l'analyte est au moins une molécule biologique, choisie de préférence dans le groupe contenant des protéines, des peptides, des acides aminés, des polysaccharides, des oligosaccharides ou des monosaccharides, des polyacides nucléiques, des oligoacides nucléiques ou des monoacides nucléiques ou des lipides.

5. Procédé suivant l'une des revendications précédentes, dans lequel la propriété optique à déterminer de l'indicateur coloré et/ou d'échantillon, est une absorption et/ou une extinction.

6. Procédé suivant l'une des revendications précédentes, dans lequel l'indicateur coloré est un colorant choisi dans le groupe contenant :

- du bleu brillant de Coomassie (CBB)
- DIDNTB
- HABA
- du vert de bromocrésol (BCG)
- du pourpre de bromocrésol (BCP)
- du bleu de bromophénol (BPB)
- du bleu de tétrabromophénol (TBPB) et/ou
- de la pyrogallolsulfonephtaléin

7. Procédé suivant l'une des revendications précédentes, dans lequel l'artéfact de mesure est provoqué par au moins une substance gênante.

8. Procédé suivant la revendication 1, dans lequel la longueur d'onde référente en ce qui concerne l'indicateur coloré, est une longueur d'onde à laquelle l'indicateur coloré n'a ni un maximum d'absorption, ni un minimum d'absorption.

9. Procédé suivant la revendication 1, dans lequel on a déterminé la courbe de référence par :

- interpolation et/ou extrapolation
- régression linéaire, et/ou
- ajustement de courbe au moyen d'un polynôme du deuxième ordre ou d'ordre supérieur,

des valeurs de mesure d'étalonnage obtenues suivant le stade d).

10. Procédé suivant l'une des revendications précédentes, dans lequel on effectue la détermination optique du au moins un analyte et/ou la mesure des propriétés optiques de l'échantillon de référence, dans un récipient choisi dans le groupe comprenant une cuvette, une plaquette de microtitrage, une éprouvette, un porte-objet et une plaquette de détection.

# FIG 1

FIG 2

FIG 3

# FIG 4

## FIG 5

# FIG 6